# EUROPÄISCHE PATENTSCHRIFT

(11) **EP 2 485 980 B1**
(45) Veröffentlichungstag und Bekanntmachung des Hinweises auf die Patenterteilung: **09.04.2014**
(21) Anmeldenummer: 10760645.1
(22) Anmeldetag: 17.09.2010
(51) Int. Cl.: C01B 3/48, C01B 3/56, C10J 3/00, F02C 3/28, C01B 31/20, B01D 53/047

(54) **VERFAHREN ZUM BETRIEB EINES IGCC-KRAFTWERKPROZESSES MIT INTEGRIERTER CO2-ABTRENNUNG**
METHOD FOR OPERATING AN IGCC POWER PLANT PROCESS HAVING INTEGRATED CO2 SEPARATION
PROCÉDÉ PERMETTANT DE FAIRE FONCTIONNER UN PROCESSUS DE CENTRALE IGCC À SÉPARATION DE CO2 INTÉGRÉE

(30) Priorität: 30.09.2009 DE 102009043499
(43) Veröffentlichungstag der Anmeldung: 15.08.2012
(73) Patentinhaber: ThyssenKrupp Uhde GmbH, 44141 Dortmund (DE)
(72) Erfinder: MENZEL, Johannes, 45731 Waltrop (DE)
(74) Vertreter: Albrecht, Rainer Harald
(86) Internationale Anmeldenummer: PCT/EP2010/063670
(87) Internationale Veröffentlichungsnummer: WO 2011/039059

(56) Entgegenhaltungen:
- WO-A2-2007/092084
- DE-A1-102008 011 771
- US-A1- 2007 178 035
- US-A1- 2008 155 984

## Beschreibung

Die Erfindung betrifft ein Verfahren zum Betrieb eines IGCC-Kraftwerkprozesses mit integrierter CO₂-Abtrennung. IGCC steht für "Integrated Gasification Combined Cycle". IGCC-Kraftwerke sind kombinierte Gas- und Dampfturbinenkraftwerke, denen eine Stufe zur Vergasung fossiler Brennstoffe, insbesondere eine Stufe zur Kohlevergasung, vorgeschaltet wird.

Die Vergasung ist ein Prozess, der aus fossilen Brennstoffen ein CO und H₂ enthaltendes Synthesegas erzeugt. Das Synthesegas wird einer CO-Konvertierung unterzogen, bei der das im Synthesegas enthaltene Kohlenmonoxid mit Wasserdampf zu Kohlendioxid und Wasserstoff umgesetzt wird. Das Synthesegas besteht nach der Konvertierung überwiegend aus Kohlendioxid und Wasserstoff. Durch chemische oder physikalische Gaswäscher kann das Kohlendioxid aus dem Synthesegas entfernt werden. Das wasserstoffreiche Synthesegas wird dann in einer Gasturbine verbrannt. Bei diesem Konzept zur Kohlendioxidentfemung verschlechtert sich der Gesamtwirkungsgrad um ca. 10 Prozentpunkte gegenüber einem konventionellen Gas- und Dampfturbinenkraftwerk ohne CO₂-Entfernung.

Aus EP 0 262 894 B1 ist ein Verfahren zur Abtrennung und Gewinnung von CO₂ aus einem Brennstoff, der neben Kohlenwasserstoffen H₂ und CO₂ enthält, bekannt, bei dem das Einsatzgas mittels einer Druckwechseladsorption (PSA **p**ressure **s**wing **a**dsorption) in eine Fraktion eines technisch reinen Wasserstoffs sowie in eine CO₂-reiche Fraktion aufgetrennt wird, wobei die CO₂-reiche Fraktion auch brennbare Gase und insbesondere H₂ enthält, und wobei die CO₂-reiche Fraktion aus der PSA-Anlage in einem gesonderten Kessel mit technisch reinem Sauerstoff verbrannt wird. Dabei kann die Abwärme beispielsweise zur Dampferzeugung genutzt werden.

Aus US-2007/017 8035 A1 ist ein Verfahren zum Betrieb eines IGCC-Kraftwerkprozesses mit integrierter CO₂-Abtrennung bekannt. Bei dem bekannten Verfahren wird aus fossilen Brennstoffen ein CO und H₂ enthaltendes Synthesegas erzeugt, wobei zumindest ein Teilstrom des Synthesegases in einer CO-Konvertierungsstufe mittels Wasserdampf zu H₂ und CO₂ umgesetzt wird. Das entstehende H₂ und CO₂-haltige Prozessgas wird mittels einer Druckwechseladsorption (PSA-Anlage) in eine Fraktion eines technisch reinen Wasserstoffs sowie in eine CO₂-reiche Fraktion aufgetrennt, wobei die CO₂-reiche Fraktion auch brennbare Gase wie CO sowie H₂ enthält. Der anfallende Wasserstoff wird in einer zur Stromerzeugung eingesetzten Gasturbine verbrannt, wobei das Abgas der Gasturbine in einem Abhitzekessel zur Erzeugung von Wasserdampf genutzt wird, der in einem ebenfalls zur Stromerzeugung genutzten Dampfturbinenprozess entspannt wird. Die CO₂-reiche Fraktion aus der Druckwechseladsorption, die durch zyklische Druckabsenkung in der Druckwechseladsorptionsanlage (PSA) freigesetzt und im Folgenden als "PSA-Offgas" bezeichnet wird, wird in einem gesonderten Kessel mit technisch reinem Sauerstoff verbrannt. Dabei wird die Abwärme des aus CO₂ und Verbrennungsprodukten bestehenden Rauchgases durch Wärmeaustausch genutzt. Bei dem bekannten Verfahren wird die Abwärme des Rauchgases zur Vorwärmung des im Gasturbinenprozess eingesetzten Wasserstoffstromes verwendet.

Die WO 2006/112 725 A1 beschreibt ebenfalls ein Verfahren mit den zuvor beschriebenen Merkmalen. Die CO₂-reiche Fraktion aus der Druckwechseladsorption wird als Brenngas zur Beheizung eines Steamreformers eingesetzt, mit dem Synthesegas erzeugt wird. Das bei der Verbrennung anfallende Rauchgas besteht im Wesentlichen aus CO₂ und Wasserdampf. Wasserdampf wird abgetrennt und der im Wesentlichen aus CO₂ bestehende Reststrom wird einer Endlagerung oder Verwertung zugeführt.

Die Abgastemperatur der Gasturbine eines herkömmlichen IGCC-Prozesses beträgt ca. 600°C. Höhere Abgastemperaturen sind mit konventionellen Gasturbinen insbesondere aus werkstofftechnischen Gründen nicht möglich. Durch die Abwärmenutzung einer Gasturbine kann daher für den Dampfturbinenprozess nur ein Dampf mit einer Temperatur von maximal etwa 550°C bereitgestellt werden. Auch die hohe Vergasungstemperatur bei der Synthesegaserzeugung kann nicht für eine höhere Überhitzung des Dampfes genutzt werden, weil das Synthesegas die Werkstoffe des Dampfkessels reduziert, so dass es zu einer dauerhaften Schädigung des Kessels kommen würde. Ein konventioneller IGCC-Kraftwerkprozess nimmt in Kauf, dass der Dampfturbinenprozess mit Dampfparametern (Druck und Überhitzungstemperatur) betrieben wird, die nicht dem Niveau eines modernen Kohlekraftwerkes entsprechen.

Vor diesem Hintergrund liegt der Erfindung die Aufgabe zugrunde, den Gesamtwirkungsgrad eines IGCC-Kraftwerkprozesses mit integrierter CO₂-Abtrennung zu verbessern.

Gegenstand der Erfindung und Lösung dieser Aufgabe ist ein Verfahren nach Anspruch 1. Ausgehend von einem Verfahren mit den eingangs beschriebenen und im Oberbegriff des Anspruches 1 angegebenen Merkmalen wird die Aufgabe erfindungsgemäß dadurch gelöst, dass durch die Verbrennung der bei der Druckwechseladsorption anfallenden CO₂-reichen Fraktion ein Rauchgas mit einer Rauchgastemperatur von mehr als 1000°C erzeugt wird, welches zur Überhitzung des in dem der Gasturbine nachgeschalteten Abhitzekessels erzeugten Dampfes und/oder zur Erzeugung eines höher gespannten Dampfes für den Dampfturbinenprozess genutzt wird und dass aus der Abwärme der Gasturbine und der Abwärme des bei der Verbrennung der CO₂-reichen Fraktion entstehenden Rauchgases ein überhitzter Hochdruckdampf mit einem Druck von mehr als 120 bar und einer Temperatur von mehr als 520°C, vorzugsweise mehr als 550°C, für den Dampfturbinenprozess erzeugt wird.

Durch die Sauerstoff geführte Verbrennung des PSA-Offgases in einem gesonderten Kessel steht ein im Wesentlichen aus CO₂ und Wasserdampf bestehendes Rauchgas mit einer Temperatur von mehr als 1000°C zur Verfügung. Durch Abwärmenutzung dieses Rauchgases ist im Vergleich zu herkömmlichen IGCC-Prozessen eine höhere Dampfüberhitzung möglich, auf beispielsweise 600 bis 700°C, so dass dementsprechend mittels der erfindungsgemäßen Verfahrensweise der Wirkungsgrad des Dampfturbinenprozesses der IGCC-Anlage wesentlich verbessert werden kann. Vorzugsweise ist eine Überhitzung auf mehr als 550°C vorgesehen. Ein unvermeidbarer Wirkungsgradverlust des Gasturbinenprozesses, der durch das dem Synthesegas fehlende PSA-Offgas hervorgerufen wird, wird dadurch zumindest teilweise kompensiert. Somit verschlechtert sich bei Anwendung der erfindungsgemäßen Lehre der Gesamtwirkungsgrad eines IGCC-Kraftwerks mit einer integrierten Kohlendioxidabtrennung gegenüber einem konventionellen IGCC-Kraftwerk ohne Kohlendioxidabtrennung nur geringfügig.

Bei dem erfindungsgemäßen Verfahren wird eine Druckwechsel-Adsorptionsanlage PSA (pressure swing adsorption) zur Trennung des konvertierten Synthesegases in eine kohlendioxidreiche und wasserstoffreiche Fraktion eingesetzt. Dabei strömt das konvertierte Synthesegas unter hohem Druck in einen ersten Adsorber. Das im Gas enthaltene Kohlendioxid wird adsorbiert. Der Wasserstoff hat nur geringe Wechselwirkungen mit der Adsorbermasse und strömt weitgehend ungehindert durch den ersten Adsorptionsapparat hindurch. Ist die Aufnahmekapazität des Adsorptionsmittels erschöpft, wird der Synthesegasstrom in einen zweiten Adsorber umgeleitet. Der erste Adsorber wird währenddessen durch Druckentspannung regeneriert, wobei sich das Kohlendioxid von dem Adsorptionsmittel löst. Das bei der Druckentspannung freiwerdende Gas wird als "PSA-Offgas" bezeichnet. Es lässt sich nicht vermeiden, dass ein Teil des in dem zugeführten Synthesegas enthaltenen Wasserstoffes, beispielsweise 15%, mit dem Synthesegas zugeführten Wasserstoffmenge, in das PSA-Offgas gelangt, wodurch die Effektivität der Synthesegaserzeugung verschlechtert wird. Somit besteht das PSA-Offgas zum großen Teil zwar aus Kohlendioxid, es enthält jedoch auch Anteile an Wasserstoff und Kohlenmonoxid. Aufgrund des hohen Kohlendioxidgehalts ist das PSA-Offgas für eine konventionelle thermische Verbrennung mit Luft nicht nutzbar.

Bei dem erfindungsgemäßen Verfahren wird das CO₂-reiche PSA-Offgas mit technisch reinem Sauerstoff verbrannt. Da Kohlendioxid eine höhere molare Wärmekapazität als Stickstoff aufweist, stellt sich eine Verbrennungstemperatur ein, die trotz des Einsatzes von reinem Sauerstoff in etwa der Verbrennungstemperatur eines fossilen Brennstoffes mit Luft entspricht. Daher können konventionelle Öfen eingesetzt werden, die für die Verbrennung von fossilen Brennstoffen mit Luft ausgelegt sind.

Das Rauchgas, welches die Sauerstoff geführte PSA-Offgas-Verbrennung verlässt, besteht fast ausschließlich aus Kohlendioxid und Wasserdampf. Dabei erweist es sich als besonders günstig, wenn bereits bei der Synthesegaserzeugung vermieden wird, dass Stickstoff in das Synthesegas gelangt. Vorzugsweise wird dazu bei Schleus- und Spülvorgängen Kohlendioxid, anstelle von Stickstoff, verwendet.

Nach der mit technisch reinem Sauerstoff betriebenen Verbrennung des CO₂-reichen PSA-Offgases und der erfindungsgemäßen Abwärmenutzung zur Verbesserung der den Dampfturbinenprozess betreffenden Dampfparameter wird der im Rauchgas enthaltende Wasserdampf abgekühlt und auskondensiert, so dass danach eine reine Kohlendioxidfraktion zur Verfügung steht. Diese kann einer Endlagerung zugeführt werden oder für eine "Enhanced Oil Recovery" eingesetzt werden, bei der das Kohlendioxid in ein Ölreservoir gepresst wird, wodurch der Druck steigt und Restöl an die Oberfläche presst.

Durch die erfindungsgemäße Abwärmenutzung kann ohne weiteres ein Hochdruckdampf mit einem Druck von mehr als 200 bar erzeugt werden, mit dem der Dampfturbinenprozess mit gutem Wirkungsgrad betrieben werden kann.

Im Rahmen des Dampfturbinenprozesses kann eine Dampfturbine eingesetzt werden, die mehrstufig ausgebildet ist und zumindest einen Hochdruckteil und einen Niederdruckteil aufweist. Bei einer solchen Dampfturbine kann dann vorgesehen sein, dass mittels des bei der Verbrennung der CO₂-reichen Fraktion entstehenden Rauchgases eine Zwischenüberhitzung des Entspannungsdampfes aus dem Hochdruckteil auf eine Temperatur von mehr als 520°C, vorzugsweise mehr als 550°C, erfolgt.

Nach dem erfindungsgemäßen Verfahren fällt ein Reststrom an, der im Wesentlichen aus CO₂ besteht. Dabei besteht die Möglichkeit, einen Anteil des anfallenden CO₂ auszuschleusen und beispielsweise bei der Erzeugung des Synthesegases aus fossilen Brennstoffen für den Transport der Brennstoffe und/oder für Spül- und Inertisierungszwecke einzusetzen.

Erfindungsgemäß wird das bei der Verbrennung der CO₂-reichen Fraktion entstehende Rauchgas zur Überhitzung des in dem der Gasturbine nachgeschalteten Abhitzekessel erzeugten Dampfes und/oder zur Erzeugung eines höher gespannten Dampfes für den Dampfturbinenprozess genutzt. Um eine weitere Erhöhung des Wirkungsgrades zu erreichen, kann die danach noch in der CO₂-reichen Fraktion enthaltene Restwärme dazu genutzt werden, die CO₂-reiche Fraktion vor ihrer Verbrennung und/oder den für die Verbrennung zugeführten technisch reinen Sauerstoff vorzuwärmen.

Die thermische Nutzung der Wärme, die bei der Verbrennung des CO₂-reichen PSA-Offgases mit reinem Sauerstoff frei wird, erfolgt vorzugsweise in einem Kessel zur Dampferzeugung. Entspricht die Verbrennungstemperatur bei der Verbrennung des PSA-Offgases nicht der benötigten Kesseltemperatur, kann dies durch mehrere Maßnahmen korrigiert werden, die in den Patentansprüchen 6 bis 13 beschrieben und nachfolgend erläutert werden.

Als besonders günstig erweist es sich, die Verbrennungstemperatur über den Anteil des Synthesegases einzustellen, welcher der CO-Konvertierung zugeführt wird. Ist die Kesseltemperatur zu niedrig, so wird der Anteil des Synthesegases, welcher der Konvertierung zugeführt wird, verringert, so dass ein größerer Anteil des Synthesegases durch Teilumfahrung an der CO-Konvertierung vorbeigeschleust wird. Ist die Kesseltemperatur zu hoch, so wird der Anteil des Synthesegases, welcher der Konvertierung zugeführt wird, erhöht und ein geringerer Anteil des Synthesegases durch Teilumfahrung an der CO-Konvertierung vorbeigeschleust. Bei einer zu hohen Kesseltemperatur ist es auch möglich, das gesamte Synthesegas der Konvertierung zu unterziehen.

Weiterhin kann die Verbrennungstemperatur über den Umsatz der CO-Konvertierung eingestellt werden, indem eine ein-, zwei- oder dreistufige CO-Konvertierung vorgesehen wird. Es ist auch möglich, den Umsatz durch Veränderung der Temperatur im Konversionsreaktor zu beeinflussen. Je größer der Umsatz von Kohlenmonoxid zu Kohlendioxid ist, desto geringer ist die Verbrennungstemperatur, die sich bei der Sauerstoff geführten Verbrennung des PSA-Offgases einstellt.

Eine weitere Möglichkeit, die Verbrennungstemperatur zu beeinflussen, besteht in einer Teilrückführung der Verbrennungsgase, welche die Sauerstoff geführte Verbrennung des PSA-Offgases verlassen. Je größer der Anteil der Verbrennungsgase ist, der in die Verbrennung zurückgeführt wird, desto stärker nimmt die Verbrennungstemperatur ab.

Eine weitere Verfahrensvariante des erfindungsgemäßen Verfahrens sieht vor, dass die Rauchgastemperatur der PSA-Offgas-Verbrennung durch Zufuhr von Synthesegas oder Zufuhr von Brenngas aus anderen Brenngasquellen angehoben wird. Ebenfalls ist es durch Zuführung eines Anteils der wasserstoffreichen Fraktion zu der Verbrennung möglich, die Temperatur der Umsetzung der CO₂-reichen Fraktion mit Sauerstoff zu erhöhen. Ferner können niedrigkalorige Gase, die bei dem IGCC-Prozess anfallen, dem Verbrennungsprozess der sauerstoffgeführten PSA-Offgas-Verbrennung zugeführt werden.

Zweckmäßig wird bereits bei der Synthesegasaufbereitung eine Entschwefelung vorgenommen. Die Entschwefelung kann dabei entweder vor oder nach der CO-Konventierung erfolgen. Das Abgas der sauerstoffgeführten Verbrennung des PSA-Offgases besteht dann fast ausschließlich aus Kohlendioxid und Wasserdampf, da die Entschwefelung bereits bei der Synthesegasaufbereitung durchgeführt wurde.

Damit das bei der Verbrennung der CO₂-haltigen Fraktion entstehende Abgas im Wesentlichen nur Kohlendioxid und Wasser enthält, wird vorzugsweise bereits das Rohsynthesegas stickstofffrei erzeugt. Als vorteilhaft erweist es sich, Wasserdampfspaltreaktionen zur Herstellung von Rohsynthesegas einzusetzen, an denen kein Stickstoff beteiligt ist, oder bei partiellen Oxidationen zur Herstellung des Rohsynthesegases reinen Sauerstoff zu verwenden. Vorzugsweise wird zudem bei Schleus- und Spülvorgängen Kohlendioxid anstelle von Stickstoff verwendet. Als besonders günstig erweist es sich, bei der Herstellung von Synthesegas mittels Kohlevergasung für den Transport der Kohle und für Spülzwecke Kohlendioxid einzusetzen.

Im Rahmen der Erfindung liegt es auch, auf eine Entschwefelung im Synthesegasweg zu verzichten und das bei der PSA-Offgas-Verbrennung entstehende Rauchgas mittels konventioneller Rauchgasentschwefelung zu entschwefeln.

Da bei dieser Verfahrensvariante das Synthesegas nicht entschwefelt wird, gelangen alle Schwefelkomponenten zusammen mit den anderen PSA-Offgas-Komponenten in das PSA-Offgas. In der PSA-Offgas-Verbrennung werden die Schwefelkomponenten zu SOₓ umgesetzt. Die SOₓ-Komponenten werden mittels einer konventionellen Rauchgasentschwefelung, beispielsweise einer Kalkwäsche mit Gipserzeugung, aus dem CO₂-haltigen Abgas abgetrennt. Alternativ besteht auch die Möglichkeit, die in dem PSA-Offgas enthaltenen Schwefelkomponenten vor der Verbrennung mit technisch reinem Sauerstoff zu entfernen.

## Patentansprüche

1. Verfahren zum Betrieb eines IGCC-Kraftwerkprozesses mit integrierter CO₂-Abtrennung,
wobei aus fossilen Brennstoffen ein CO und H₂ enthaltendes Synthesegas erzeugt wird,
wobei zumindest ein Teilstrom des Synthesegases in einer CO-Konvertierungsstufe mittels Wasserdampf zu H₂ und CO₂ umgesetzt wird,
wobei das entstehende H₂ und CO₂-haltige Prozessgas mittels einer Druckwechseladsorption (PSA) in technisch reinen Wasserstoff sowie eine CO₂-reiche Fraktion, die auch brennbare Gase wie CO und H₂ enthält, aufgetrennt wird,
wobei der anfallende Wasserstoff in mindestens einer zur Stromerzeugung eingesetzten Gasturbine verbrannt wird,
wobei das Abgas der Gasturbine in einem Abhitzekessel zur Erzeugung von Wasserdampf genutzt wird, der in einem ebenfalls zur Stromerzeugung genutzten Dampfturbinenprozess entspannt wird,
wobei die CO₂-reiche Fraktion aus der Druckwechseladsorption in einem gesonderten Kessel mit technisch reinem Sauerstoff verbrannt wird und die Abwärme des aus CO₂ und Verbrennungsprodukten bestehenden Rauchgases durch Wärmeaustausch genutzt wird,
wobei Wasserdampf aus dem bei der Verbrennung der CO₂-reichen Fraktion anfallenden Rauchgases abgetrennt und ein im Wesentlichen aus CO₂ bestehender Reststrom einer Endlagerung oder Verwertung zugeführt wird,
**dadurch gekennzeichnet, dass** durch die Verbrennung der bei der Druckwechseladsorption anfallenden CO₂-reichen Fraktion ein Rauchgas mit einer Rauchgastemperatur von mehr als 1000°C erzeugt wird, welches zur Überhitzung des in dem der Gasturbine nachgeschalteten Abhitzekessels erzeugten Dampfes und/oder zur Erzeugung eines höher gespannten Dampfes für den Dampfturbinenprozess genutzt wird, und dass aus der Abwärme der Gasturbine und der Abwärme des bei der Verbrennung der CO₂-reichen Fraktion entstehenden Rauchgases ein überhitzter Hochdruckdampf mit einem Druck von mehr als 120 bar und einer Temperatur von mehr als 520°C für den Dampfturbinenprozess erzeugt wird.

2. Verfahren nach Anspruch 1, **dadurch gekennzeichnet, dass** ein Hochdruckdampf mit einem Druck von mehr als 200 bar für den Dampfturbinenprozess erzeugt wird.

3. Verfahren nach Anspruch 1 oder 2, **dadurch gekennzeichnet, dass** für den Dampfturbinenprozess eine Dampfturbine eingesetzt wird, die zumindest einen Hochdruckteil und einen Niederdruckteil aufweist und dass mittels des bei der Verbrennung der CO₂-reichen Fraktion entstehenden Rauchgases eine Zwischenüberhitzung des Entspannungsdampfes aus dem Hochdruckteil auf eine Temperatur von mehr als 520°C erfolgt.

4. Verfahren nach einem der Ansprüche 1 bis 3, **dadurch gekennzeichnet, dass** bei der Erzeugung des Synthesegases aus fossilen Brennstoffen CO₂ für den Transport der Brennstoffe und/oder für Spül- und Inertisierungszwecke eingesetzt wird, um das Synthesegas stickstofffrei zu erzeugen.

5. Verfahren nach einem der Ansprüche 1 bis 4, **dadurch gekennzeichnet, dass** das bei der Verbrennung der CO₂-reichen Fraktion entstehende Rauchgas nach der Überhitzung des in dem der Gasturbine nachgelagerten Abhitzekessels erzeugten Dampfes bzw. nach der Erzeugung eines höher gespannten Dampfes für den Dampfturbinenprozess für eine Vorwärmung der CO₂-reichen Fraktion vor ihrer Verbrennung und/oder für eine Vorwärmung des zugeführten technisch reinen Sauerstoffes genutzt wird.

6. Verfahren nach einem der Ansprüche 1 bis5, **dadurch gekennzeichnet, dass** die Verbrennungstemperatur bei der Verbrennung der CO₂-reichen Fraktion durch den Gehalt an brennbaren Gasen in der CO₂-reichen Fraktion geregelt wird.

7. Verfahren nach einem der Ansprüche 1 bis 6, **dadurch gekennzeichnet, dass** ein Teilstrom des Synthesegases in einem By-Pass an der CO-Konvertierungsstufe vorbeigeführt wird und dass durch Steuerung des im By-Pass geführten Mengenstromes die sich bei der Verbrennung der CO₂-reichen Fraktion einstellende Verbrennungstemperatur geregelt wird.

8. Verfahren nach einem der Ansprüche 1 bis 7, **dadurch gekennzeichnet, dass** zur Reduzierung der Rauchgastemperatur ein Abgasteilstrom aus der CO₂-reichen Fraktion, in den Kessel für die Verbrennung der CO₂-reichen Fraktion zurückgeführt wird.

9. Verfahren nach einem der Ansprüche 1 bis 8, **dadurch gekennzeichnet, dass** die sich bei der Verbrennung der CO₂-reichen Fraktion einstellende Rauchgastemperatur durch Zufuhr von Synthesegas oder Zufuhr von Brenngas aus anderen Brenngasquellen angehoben wird.

10. Verfahren nach einem der Ansprüche 1 bis 9, **dadurch gekennzeichnet, dass** das Synthesegas vor der CO-Konvertierung entschwefelt wird.

11. Verfahren nach einem der Ansprüche 1 bis 9, **dadurch gekennzeichnet, dass** das Synthesegas nach der CO-Konvertierung entschwefelt wird.

12. Verfahren nach einem der Ansprüche 1 bis 9, **dadurch gekennzeichnet, dass** im Synthesegas enthaltene Schwefelkomponenten durch Druckabsenkung in die bei der Druckwechseladsorption anfallende CO₂-reiche Fraktion gelangen, wobei die CO₂-reiche Fraktion vor der Verbrennung mit dem technisch reinen Sauerstoff entschwefelt wird.

13. Verfahren nach einem der Ansprüche 1 bis 9, **dadurch gekennzeichnet, dass** im Synthesegas enthaltene Schwefelkomponenten durch Druckabsenkung in die bei der Druckwechseladsorption anfallende CO₂-reiche Fraktion gelangen und bei der Verbrennung der CO₂-reichen Fraktion zu SOₓ umgesetzt werden und dass die SOₓ-Komponenten mittels einer Rauchgasentschwefelung aus dem CO₂-haltigen Rauchgas abgetrennt werden.

## Claims

1. A method for operating an IGCC power plant process having integrated CO₂ separation,
wherein a syngas containing CO and H₂ is generated from fossil fuels, wherein at least a partial flow of the syngas is converted into H₂ and CO₂ in a CO-conversion stage by means of steam,
wherein the resulting H₂- and CO₂-containing process gas is separated by means of pressure-swing adsorption (PSA) into technically pure hydrogen and a CO₂-rich fraction that also contains combustible gases such as CO and H₂,
wherein the hydrogen that is generated is combusted in at least one gas turbine used for generating electrical power,
wherein the waste gas from the gas turbine is used in a heat-recovery boiler for generating steam which is expanded in a steam turbine process likewise used for generating electrical power,
wherein the CO₂-rich fraction from the pressure-swing adsorption is combusted in a separate boiler using technically pure oxygen and the waste heat from the stack gas consisting of CO₂ and combustion products is used by heat exchange,
wherein steam is separated from the stack gas generated during combustion of the CO₂-rich fraction and a residual flow substantially consisting of CO₂ is fed for final disposal or to a recovery process,
**characterized in that** through the combustion of the CO₂-rich fraction generated during the pressure-swing adsorption, a stack gas with a stack gas temperature of over 1000 °C is produced, which is used to superheat the steam produced in the heat-recovery boiler downstream of the gas turbine and/or to produce a higher pressurized steam for the steam turbine process and that superheated high-pressure steam with a pressure of over 120 bar and a temperature of over 520 °C is produced for the steam turbine process from the waste heat from the waste heat from the gas turbine and the waste heat from the stack gas generated during the combustion of the CO₂-rich fraction.

2. The method according to claim 1, **characterized in that** high-pressure steam with a pressure of over 200 bar is generated for the steam turbine process.

3. The method according to claim 1 or 2, **characterized in that** a steam turbine is used for the steam turbine process, which has at least one high-pressure portion and a low-pressure portion and that by means of the stack gas generated during combustion of the CO₂-rich fraction, intermediate superheating of the expansion steam from the high-pressure portion to a temperature of more than 520 °C takes place.

4. The method according to one of the claims 1 to 3, **characterized in that** during the generation of syngas from fossil fuels, CO₂ is used for the transportation of fuels and/or for purging and inertisation purposes, in order to generate syngas in a nitrogen-free manner.

5. The method according to one of the claims 1 to 4, **characterized in that** stack gas generated during combustion of the CO₂-rich fraction is used after the superheating of the steam produced in the heat-recovery boiler downstream of the gas turbine or after the generation of a higher pressurized steam for the steam turbine process for preheating the CO₂-rich fraction before its combustion and/or for preheating the supplied technically pure oxygen.

6. The method according to one of the claims 1 to 5, **characterized in that** the combustion temperature during combustion of the CO₂-rich fraction is controlled by the content of combustible gases in the CO₂-rich fraction.

7. The method according to one of the claims 1 to 6, **characterized in that** a partial flow of the syngas is conveyed past the CO conversion stage in a by-pass and that the combustion temperature resulting from combustion of the CO₂-rich fraction is regulated by controlling the volume flow conveyed in the by-pass.

8. The method according to one of the claims 1 to 7, **characterized in that** a partial waste gas flow is recycled from the CO₂-rich fraction into the boiler for combustion of the CO₂-rich fraction, in order to reduce the stack gas temperature.

9. The method according to one of the claims 1 to 8, **characterized in that** the stack gas temperature resulting from combustion of the CO₂-rich fraction is raised by feeding syngas or feeding combustion gas from other combustion gas sources.

10. The method according to one of the claims 1 to 9, **characterized in that** the syngas is desulphurized prior to CO-conversion.

11. The method according to one of the claims 1 to 9, **characterized in that** the syngas is desulphurized following the CO-conversion.

12. The method according to one of the claims 1 to 9, **characterized in that** sulphur components contained in the syngas get into the CO₂-rich fraction generated during the pressure-swing adsorption due to a pressure drop, wherein the CO₂-rich fraction is desulphurized prior to combustion with the technically pure oxygen.

13. The method according to one of the claims 1 to 9, **characterized in that** the sulphur components contained in the syngas get into the CO₂-rich fraction generated during the pressure-swing adsorption due to a pressure drop and are converted into SOₓ during combustion of the CO₂-rich fraction and that the SOₓ components are separated from the CO₂-containing stack gas by means of stack gas desulphurization.

## Revendications

1. Procédé pour faire fonctionner un processus de centrale électrique IGCC avec séparation de CO₂ intégrée
lors duquel, à partir de combustibles fossiles, on créé un gaz de synthèse contenant du CO et du H₂,
lors duquel, on transforme au moins un flux partiel du gaz de synthèse en H₂ et en CO₂, au moyen de vapeur d'eau, lors d'une étape de conversion du CO,
lors duquel on sépare le gaz de processus contenant du H₂ et du CO₂ au moyen d'une adsorption par pression fluctuante (PSA) en hydrogène techniquement pur, ainsi qu'en une fraction riche en CO₂ qui contient également des gaz combustibles comme du CO et du H₂,
lors duquel on fait brûler l'hydrogène produit dans au moins une turbine à gaz utilisée pour générer du courant,
lors duquel on utilise les gaz perdus de la turbine à gaz dans une chaudière à chaleur perdue pour générer de la vapeur d'eau que l'on détend lors d'un processus utilisé également pour générer du courant,
lors duquel on fait brûler la fraction riche en CO₂ issue de l'adsorption par pression fluctuante dans une chaudière séparée avec de l'oxygène techniquement pur et on utilise par échange thermique la chaleur perdue des gaz de fumée issus du CO₂ et des produits de combustion,
lors duquel on sépare de la vapeur d'eau des gaz de fumée produits lors de la combustion de la fraction riche en CO₂ et on amène un flux résiduel constitué sensiblement de CO₂ à un stockage final ou à une valorisation,
**caractérisé en ce que** par la combustion de la fraction riche en CO₂ produite lors de l'adsorption pat pression fluctuante, on génère des gaz de fumée à une température de gaz de fumée supérieure à 1000°C, qu'on utilise pour surchauffer la vapeur générée dans la chaudière à chaleur perdue montée en aval de la turbine à gaz et/ou pour générer une vapeur à tension plus élevée pour le processus de la turbine à vapeur et **en ce qu'**on génère à partir de la chaleur perdue de la turbine à gaz et de la chaleur perdue des gaz de fumées produits lors de la combustion de la fraction riche en CO₂ une vapeur haute pression surchauffée d'une pression supérieure à 120 bar et à une température supérieure à 520°C pour le processus de la turbine à vapeur.

2. Procédé selon la revendication 1, **caractérisé en ce qu'**on génère une vapeur haute pression d'une pression supérieure à 200 bar pour le processus de la turbine à vapeur.

3. Procédé selon la revendication 1 ou la revendication 2, **caractérisé en ce qu'**on utilise pour le processus de la turbine à vapeur une turbine à vapeur qui comporte au moins une partie haute pression et une partie basse pression et **en ce qu'**au moyen des gaz de fumée produits lors de la combustion de la fraction riche en CO₂, il s'effectue une surchauffe intermédiaire de la vapeur de détente issue de la partie haute pression à une température supérieure à 520°C.

4. Procédé selon l'une quelconque des revendications 1 à 3, **caractérisé en ce que** lors de la génération du gaz de synthèse à partir de combustibles fossiles, on utilise du CO₂ pour le transport des combustibles et/ou à des fins de rinçage et d'inertisation pour générer le gaz de synthèse exempt d'azote.

5. Procédé selon l'une quelconque des revendications 1 à 4, **caractérisé en ce qu'**on utilise les gaz de fumée produits lors de la combustion de la fraction riche en CO₂ après la surchauffe de la vapeur générée dans la chaudière de chaleur perdue montée en aval de la turbine à gaz ou après la génération d'une vapeur à tension plus élevée pour le processus de la turbine à vapeur pour un préchauffage de la fraction riche en CO₂ avant sa combustion et/ou pour un préchauffage de l'oxygène techniquement pur amené.

6. Procédé selon l'une quelconque des revendications 1 à 5, **caractérisé en ce qu'**on règle la température de combustion lors d'une combustion de la fraction riche en CO₂ par la teneur de gaz combustibles dans la fraction riche en CO₂.

7. Procédé selon l'une quelconque des revendications 1 à 6, **caractérisé en ce qu'**on fait passer un flux partiel du gaz de synthèse dans une dérivation devant l'étape de conversion de CO et **en ce que** par commande du flux quantitatif conduit dans la dérivation, on règle la température de combustion s'établissant lors de la combustion de la fraction riche en CO₂.

8. Procédé selon l'une quelconque des revendications 1 à 7, **caractérisé en ce que** pour la réduction de la température des gaz de fumée, on recycle un flux des gaz perdus issu de la fraction riche en CO₂ dans la chaudière pour la combustion de la fraction riche en CO₂.

9. Procédé selon l'une quelconque des revendications 1 à 8, **caractérisé en ce qu'**on remonte la température des gaz de fumée s'établissant lors de la combustion de la fraction riche en CO₂ par amenage de gaz de synthèse ou par amenage de gaz combustible issu d'autres sources de gaz combustibles.

10. Procédé selon l'une quelconque des revendications 1 à 9, **caractérisé en ce qu'**on désulfure le gaz de synthèse avant la conversion du CO.

11. Procédé selon l'une quelconque des revendications 1 à 9, **caractérisé en ce qu'**on désulfure le gaz de synthèse après la conversion du CO.

12. Procédé selon l'une quelconque des revendications 1 à 9, **caractérisé en ce que** des composants sulfureux contenus dans le gaz de synthèse arrivent par baisse de pression dans la fraction riche en CO₂ produite lors de l'adsorption par pression fluctuante, alors qu'on désulfure la fraction riche en CO₂ avant la combustion avec l'oxygène techniquement pur.

13. Procédé selon l'une quelconque des revendications 1 à 9, **caractérisé en ce que** des composants sulfureux contenus dans le gaz de synthèse arrivent par baisse de pression dans la fraction riche en CO₂ produite lors de l'adsorption par pression fluctuante et lors de la combustion de la fraction riche en CO₂ sont transformés en SOx et **en ce qu'**on sépare les composants du SOₓ au moyen d'une désulfuration des gaz de fumée contenant du CO₂.
